# EUROPEAN PATENT APPLICATION

(11) **EP 4 763 328 A1**
(43) Date of publication of application: **24.06.2026**
(21) Application number: 24222372.5
(22) Date of filing: 20.12.2024
(51) Int. Cl.: B01J 19/08

(54) **THERMAL REACTOR WITH CONSECUTIVE EXPANSION AND QUENCHING**

(71) Applicant: Nitrocapt AB, 756 51 Uppsala (SE)
(72) Inventor: ANDERSSON, Ronnie, 431 69 Mölndal (SE); BAELING, Peter, 178 38 Ekerö (SE); FORSBERG, Gustaf, 749 60 Örsundsbro (SE); SELVAKUMARAN, Arunkumar, 176 71 Järfälla (SE)
(74) Representative: Kransell & Wennborg KB

(57) **Abstract**

A thermal reactor arrangement for the synthesis of nitrogen oxides (NOx), comprising a plasma chamber and an expansion chamber having at least one port or inlet configured to introduce a quenching medium arranged in said expansion chamber. A method for the synthesis of nitrogen oxides (NOx) wherein a gas mixture comprising nitrogen oxides (NOx) is expanded to form an expanded gas mixture at a pressure which is about 70 % of the pressure at which nitrogen and oxygen molecules dissociate, preferably about 60 %, more preferably about 50 %, and most preferably about 40 % of the pressure at which nitrogen and oxygen molecules dissociate, and wherein said expanded gas mixture is quenched by introducing a quenching medium to further reduce the temperature of the expanded gas mixture.

## Description

### Technical field

The present disclosure relates to thermal reactors and thermal reactor arrangements for the synthesis of nitrogen oxides (NOx) and in particular to plasma synthesis of NO, NO₂ and HNOs, as well as to methods of operating such reactors and arrangements.

### Background

Plasma technology can be used to dissociate nitrogen and oxygen molecules, allowing them to recombine into reactive nitrogen species like nitrogen monoxide (NO), a precursor to nitrogen oxides (NOₓ) that can be further processed into nitric acid (HNOs). Plasma-based nitrogen fixation using thermal reactors presents an alternative, sustainable approach to ammonia production that circumvents the need for traditional high-pressure fossil fuel-based processes, such as the Haber-Bosch process.

The major advantage of plasma-based nitrogen fixation is its reliance on electrical energy, which can be sourced from renewable energy systems, making the process entirely CO₂-free if green electricity, for example geothermal energy, wind power or photovoltaics, is used. This offers a possibility of decentralized, small-scale ammonia production, particularly suited for areas with abundant renewable resources but limited infrastructure. Transition to plasma-based nitrogen fixation would significantly reduce the carbon emission footprint of agriculture.

There are also initiatives to reduce and eventually eliminate the carbon footprint of the Haber-Bosch process by utilizing renewable energy sources to power the reaction and to produce hydrogen via electrolysis. This approach maintains the scalability and efficiency of the traditional method while addressing its environmental drawbacks. This green transition depends heavily on the 240060EP "Expansion and quenching" availability of low-cost, renewable electricity and large amounts of hydrogen produced in cost-effective electrolyzers. Despite being more sustainable, the Green Haber-Bosch process remains capital-intensive and primarily suited for centralized, large-scale production facilities. Unlike the large-scale Green Haber-Bosch process, plasma-based systems can be highly modular and adaptable to varying production scales. Plasma technology is however associated with other challenges, and there is a need for developing energy efficient, safe and scalable processes.

WO 2024/151883 discloses a plasma reactor system that includes a gasflow-engineered reactor for producing fixed nitrogen products. In some instances, the reactor may include a vortex-inducing input mechanism and/or a quenching mechanism. According to WO 2024/151883 said vortex-inducing input mechanism and/or quenching mechanism are both integrated in the plasma chamber.

There remains a need for further improvements, *inter alia* to improve the energy efficiency and to better control the reaction kinetics and the course and endpoints of the chemical reactions.

### Summary

The present inventors surprisingly realized that expansion and quenching of the process gases can be separated and shifted in time and space, so that an initial expansion is followed by the introduction of quenching medium in the expanded gas, as outlined in the attached claims and as described in further detail in the following summary, description, and drawings.

One aspect of the present invention is thus a thermal reactor arrangement for the synthesis of nitrogen oxides (NOx), said reactor arrangement comprising a plasma chamber configured to hold a plasma at a temperature and a pressure at which nitrogen and oxygen molecules dissociate and form nitrogen oxides (NOx), said plasma chamber having a gas inlet configured to introduce a gas mixture, a heater configured to heat said gas mixture to generate a plasma in a plasma-generation zone, a reaction zone downstream of, and partly overlapping said plasma-generation zone (32), and a gas outlet configured to release gas from said reaction zone; wherein an expansion chamber is arranged in fluid connection with said gas outlet, and wherein at least one port, configured to introduce a quenching medium, is arranged in said expansion chamber, and wherein said expansion chamber further comprises an outlet configured to release expanded and quenched gas.

According to one embodiment of said aspect, at least one dimension of said expansion chamber is configured in relation to at least one dimension of said plasma chamber to create a pressure drop to a pressure which is about 30 to 70 % of the pressure in the plasma chamber, preferably about 30 to 60 %, more preferably about 50 %, and most preferably about 40 % of the pressure in the plasma chamber (30).

According to a preferred embodiment, the pressure in the expansion chamber is at least 1 bar (100 kPa) absolute pressure.

According to an embodiment, freely combinable with any of the embodiments herein, a diameter (D) of the expansion chamber is greater than a diameter (d) of the plasma chamber, preferably two times, more preferably 3 times the diameter (d) of the plasma chamber.

According to another embodiment, freely combinable with any of the embodiments herein, said reaction zone and said expansion chamber exhibit rotational symmetry around their length axis, and wherein the diameter (D) of said expansion chamber is at least two times, preferably at least three times the diameter (d) of said reaction zone.

According to an embodiment, at least one port for introducing a quenching medium into said expansion chamber is configured to cause at least a portion of the quenching medium to initially flow in a direction opposite to the gas entering the expansion chamber. One way of achieving this is by introducing the quenching medium into the quenching chamber with a velocity vector that has one vector component directed opposite to the exit direction of the gas leaving the reactor.

According to another embodiment, said at least one port for introducing a quenching medium into said expansion chamber is configured to cause at least a portion of the quenching medium to flow tangentially along the inner surface of said expansion chamber in a direction towards the outlet of said chamber. Preferably the quenching medium is introduced in a direction and with velocity such, that the tangential flow supports the formation of a swirl or vortex which travels downstream with the flow of expanded gas.

According to another embodiment, freely combinable with any of the embodiments herein, said quenching medium is chosen from nitrogen, oxygen, air, and water, and wherein said quenching medium is introduced in the form of a liquid, a gas, or a mixture thereof.

According to another embodiment, freely combinable with any of the embodiments herein, said heater is chosen from a microwave generator, a radio wave generator, a laser generator, an inductively coupled plasma (ICP) or transformer coupled plasma (TCP), and an electric discharge generator.

Another aspect relates to a method for the synthesis of nitrogen oxides (NOx) comprising the following steps:
- providing a gas mixture comprising oxygen and nitrogen; and
- heating said gas mixture to form a plasma at a temperature and pressure at which nitrogen and oxygen molecules dissociate and form nitrogen oxides (NOx), wherein said gas mixture comprising nitrogen oxides (NOx) is expanded to form an expanded gas mixture at a pressure which is about 70 % of the pressure at which nitrogen and oxygen molecules dissociate, preferably about 60 %, more preferably about 50 %, and most preferably about 40 % of the pressure at which nitrogen and oxygen molecules dissociate, and wherein said expanded gas mixture is quenched by introducing a quenching medium to further reduce the temperature of the expanded gas mixture.

According to one embodiment of said second aspect, and also applicable to the operation of the arrangement of said first aspect, said gas mixture comprising oxygen and nitrogen is heated to a temperature of at least 2300 K and maintained at a pressure of 2 -100 bar (200 - 10 000 kPa) or about 5 - 100 bar (500 - 10 000 kPa) absolute pressure forming a gas mixture comprising NOx.

According to another embodiment, said gas mixture is expanded to form a gas mixture at a pressure of at least about 1 bar (100 kPa) absolute pressure, preferably a pressure of 1 - 50 bar (100 - 5000 kPa), such as 1 - 30 bar (100 - 1000 kPa), such as 1 - 10 bar (100 - 1000 kPa).

According to yet another embodiment, said quenching medium is introduced creating a tangential flow along the inner surface of said expansion chamber (40) in a direction towards the outlet of said chamber. Preferably the quenching medium is introduced in a direction and with velocity such, that the tangential flow supports the formation of a swirl or vortex which travels downstream with the flow of expanded gas.

According to another embodiment, said quenching medium is introduced creating a flow of quenching medium in a direction substantially opposite to direction of the gas entering the expansion chamber. According to one embodiment, a flow of quenching medium is directed towards and against the central axis of the expansion chamber. One way of achieving this is by introducing the quenching medium into the quenching chamber with a velocity vector that has one vector component directed opposite to the exit direction of the gas leaving the reactor.

According to another embodiment, freely combinable with any of the embodiments herein, said quenching medium is chosen from nitrogen, oxygen, air, and water, and wherein said quenching medium is introduced in the form of a liquid, a gas, or a mixture thereof.

Further aspects and embodiments, as well as their advantages, will be apparent from the attached drawings and the detailed description.

### Short description of the drawings

The invention is now described, by way of example, with reference to the accompanying drawings, in which:

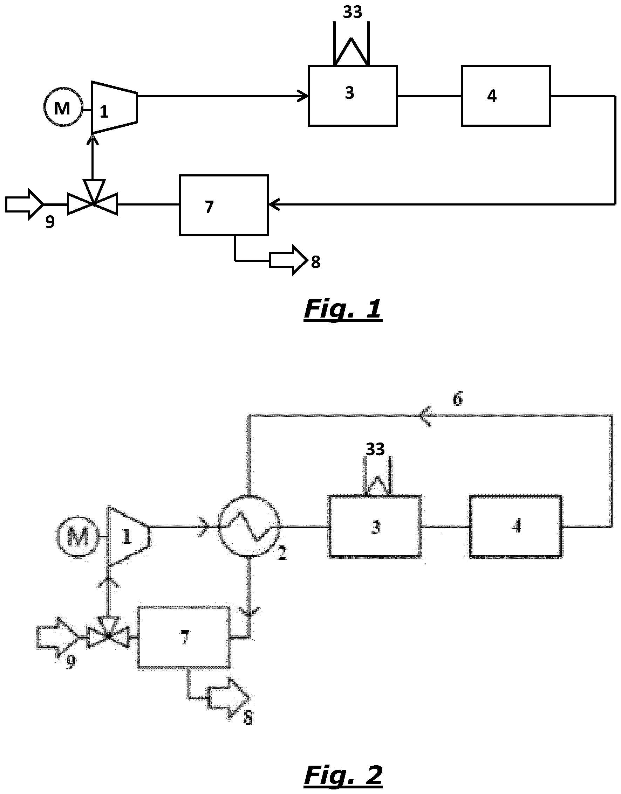

Figure 1 schematically shows a single-pressure plasma-based nitrogen fixation process starting with a booster compressor (1) compressing a gas mixture, typically 50 % O₂ and 50 % N₂ to a desired pressure. The compressed gas mixture is fed into a plasma reactor (3) equipped with a heater (33) generating a plasma. Said heater is chosen from a microwave generator, a radio wave generator, a laser generator, an inductively coupled plasma (ICP) or a transformer coupled plasma (TCP), and an electric discharge generator. Following the plasma reactor, the gas mixture is led into an expansion chamber (4) where it is subsequently quenched. The gas mixture is then led to downstream treatment (7), for example comprising an adsorption column where the gas mixture reacts to form HNOs which is led to further processing (8) depending on the intended end product. Unreacted gas is recirculated, and fresh gases (9) fed into the process to maintain a constant feed into the reactor.
Figure 2 schematically shows an alternative single-pressure plasma-based nitrogen fixation process similar to that shown in Fig. 1, but where the gas mixture exiting the expansion chamber (4) are led (6) to a heat exchanger (2) where process heat is recovered and used to heat the compressed gas mixture before it enters the plasma reactor (3). After passing the heat exchanger, the gas mixture is led to downstream treatment (7), as in Fig. 1. Unreacted gas is recirculated, and fresh gases (9) fed into the process to maintain a constant feed into the reactor.

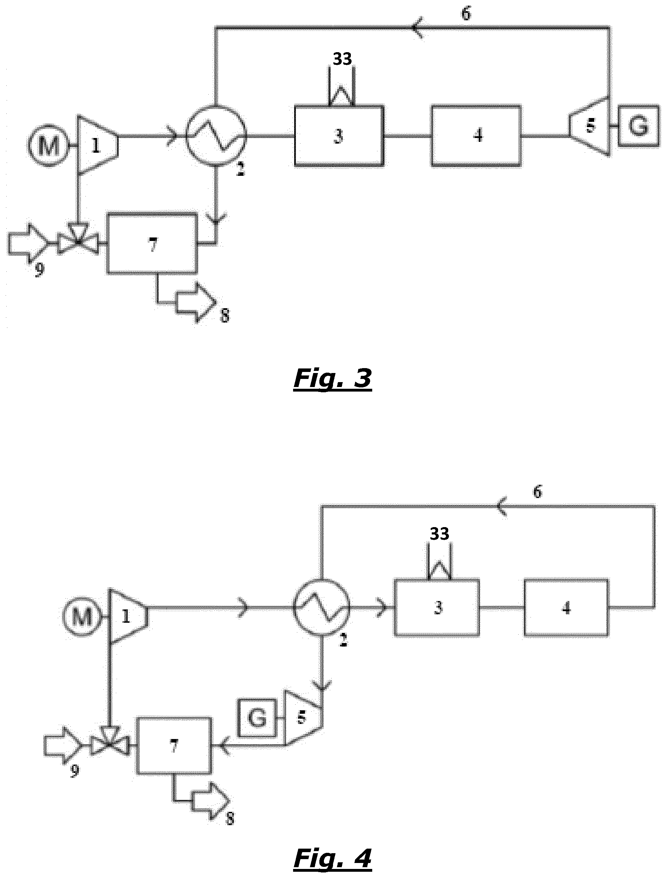

Figure 3 schematically shows a dual-pressure high-temperature plasma-based nitrogen fixation process, where gas leaving the expansion chamber (4) is led into one or more turbines (5) to improve energy recovery. The process thus features two primary pressure levels, a high-pressure level at the reactor (3) inlet and a lower pressure in the heat exchanger (2) as well as upstream of the treatment (7). The turbines, placed directly in the gas flow, expand the high-temperature, high-pressure gas, converting excess thermal energy into mechanical energy, which can be further converted into electricity. This results in a net energy gain, despite the increased work required for recompression.
Fig. 4 schematically shows a dual-pressure low-temperature plasma-based nitrogen fixation process, where gas leaving the expansion chamber (4) is first led to a heat-exchanger (2) before entering one or more turbines (5). In this set-up, the turbine operates under milder conditions, as the gases have transferred part of their thermal energy to the compressed gas in the heat exchanger (2), preheating it before it enters the plasma reactor (3). This set-up optimizes preheating efficiency, as the temperature is not constrained by the turbine's inlet temperature limit.

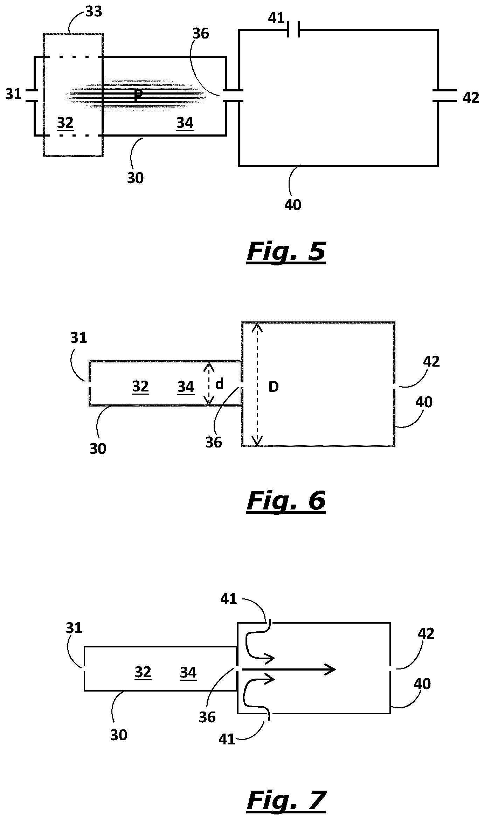

Fig. 5 shows a schematical cross-section of a plasma chamber (30) configured to hold a plasma (P) at a temperature and a pressure at which nitrogen and oxygen molecules dissociate, said plasma chamber (30) having a gas inlet (31) configured to introduce a gas mixture, a heater (33) configured to heat said gas mixture to generate a plasma in a plasma-generation zone (32), a reaction zone (34) downstream of said plasma-generation zone (32), and a gas outlet (36) configured to release gas from said reaction zone (34) into an expansion chamber (40) arranged in fluid connection with said gas outlet (36), and at least one port (41), configured to introduce a quenching medium into said expansion chamber (40), and an outlet (42) configured to release expanded and quenched gas.
Fig. 6 illustrates, for a set-up as shown in Fig. 5, how the plasma chamber (30) and in particular the reaction zone (34) has one dimension, here a diameter (d), and the expansion chamber (40) has another dimension, here a diameter (D) which is larger than the diameter of the plasma chamber (30). The gas mixture thus passes from a chamber with a first cross-section into a chamber with second cross-section larger than said first cross-section. In one embodiment, this transition is immediate, a chamber with a first diameter and a first pressure opening up to a chamber with a second diameter larger than said first, and a second pressure, lower than said first pressure. In one embodiment, not shown, this transition from one dimension, e.g. one diameter to another, takes place through the opening (36), so that a cross-section of said opening, in the direction of the flow, is shaped as a cone, an hourglass, or similar. The transition can be stepwise or smooth and continuous.
   In a preferred embodiment, the said reaction zone and said expansion chamber exhibit rotational symmetry around their length axis, and most preferably the diameter (D) of said expansion chamber is then at least two times, preferably at least three times the diameter (d) of said reaction zone. The dimensional change when going from the plasma chamber (30) to the expansion chamber (40) is crucial for achieving a rapid expansion and pressure drop when gas passes through the outlet (36). This can be achieved by designing the upstream (37) and downstream (38) dimensions of the outlet (36) so that outlet is first converting and then diverging in the direction of the flow into the expansion chamber. Preferably also the transition from the plasma chamber (30) into the expansion chamber (40) exhibits rotational symmetry.
Fig. 7 schematically shows how a quenching medium is introduced into the expanded gas in the expansion chamber (40) through inlets (41), wherein the inlets (41) are arranged so that the quenching medium at least in part moves in a direction substantially opposite to the direction of the expanded gas, and flows counter-current therewith before adjusting to the flow of expanding gas. This is a result *inter alia* of the Venturi effect and this helps to create a flow of colder gas along the inner walls of the expansion chamber in the part of the expansion chamber where the hot gas first enters. This cools the inner walls, increases the efficiency of the quenching, and additionally helps to center and stabilize the gas flow within the expansion chamber. A further advantage is that this flow helps to break up the fast and hot jet from the outlet of the reactor, rapidly cooling it down and reducing its velocity. This helps to avoid or minimize the occurrence of shock waves. This also significantly reduces the noise, and other problems associated with shock waves, such as vibrations, temperature variations including a temporary increase in temperature, risking backward reactions and damage to the reactor components.

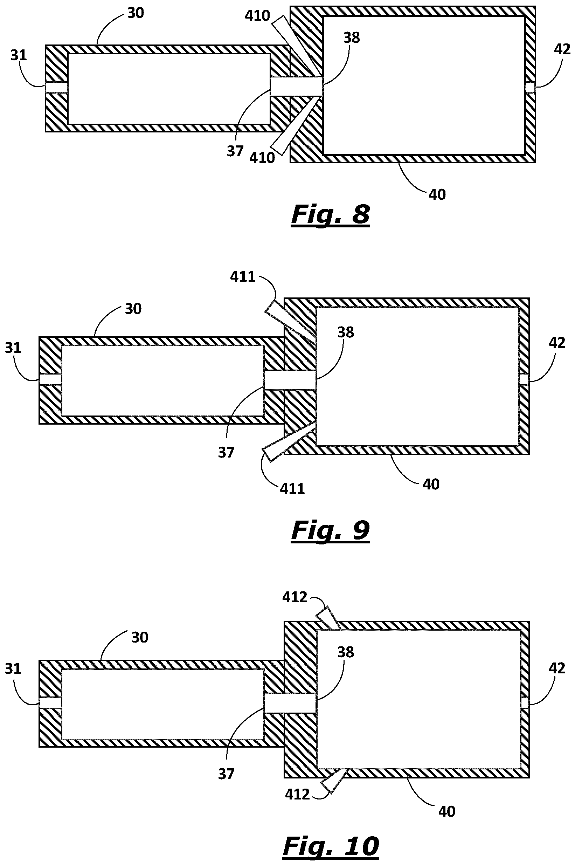

Fig. 8 illustrates how one or more inlets for quenching medium, here designated (410) can be integrated in the downstream portion (38) of outlet (32) leading into the expansion chamber (40) and thus feeding quenching medium into the expanded gas in an early phase of expansion. In Fig. 8, only two inlets are shown, but the number of inlets is preferably at least three, positioned symmetrically along the periphery of the downstream portion (38) of outlet (32). Also here, the early introduction of quenching media increases the efficiency of the expansion quenching, and additionally helps to center, and to stabilize the gas flow pattern within the expansion chamber and also protects the inner walls of the expansion chamber.
Fig. 9 illustrates how one or more inlets for quenching medium, here designated (411) can be arranged in the end wall of the expansion chamber (40) to feed quenching medium into the expanded gas. Through a symmetric arrangement of the inlets (411), as shown in Fig. 12 below, the flow of quenching medium can center and stabilize the incoming plasma and the expanded gas. Again, only two inlets are shown in this schematic illustration, but the number of inlets is preferably at least three, positioned symmetrically around the outlet (32) as illustrated in Fig. 12.
Fig. 10 illustrates how one or more inlets for quenching medium, here designated (412) can be arranged in the side walls of the expansion chamber (40) to feed quenching medium into the expanded gas. Also here, a symmetric arrangement of the inlets (411), as shown in Fig. 12, creates a flow of quenching medium that centers and stabilizes the plasma and expanded gas. The inlets are preferably configured to create a tangential flow of quenching medium, creating a swirl or vortex in the expansion chamber (40).

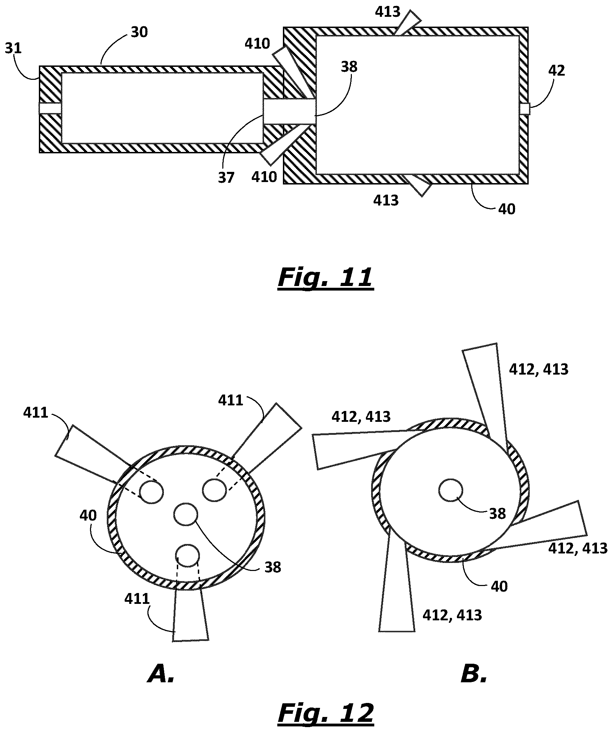

Fig. 11 illustrates an embodiment where at least two sets of inlets (410) and (413) are arranged to introduce quenching medium into the expansion chamber, but in different directions. Here, a first set of inlets exemplified by the inlets (410) introduce quenching medium in a direction at least partially coinciding with the direction of the gas entering the expansion chamber (40) through the downstream portion (38) of the outlet from the reaction chamber (30). A second set of inlets, here exemplified by the inlets (413) are arranged to introduce quenching medium in a direction at least partially opposite to the direction of the gas entering the expansion chamber. This creates turbulence and significantly increases the rate of cooling the expanded gas.
Fig. 12 shows two schematic views of the expansion chamber (40) in cross section. Fig. 12 A shows how three inlets (411) for quenching medium are arranged in the end wall of the expansion chamber (40) symmetrically positioned around the outlet (38) through which the hot gas enters from the plasma chamber. Fig. 12 B shows how four inlets (412, 413) are arranged in the side wall of the reaction chamber (40) introducing quenching medium tangentially along the side walls. In combination with the incoming gas entering the expansion chamber through the opening (38), the tangential flow forms a swirl or vortex traveling along the length of the expansion chamber.
Fig. 13 is a graph showing an axial plot of the static temperature (Kelvin) as a function of the distance the flow of gas travels in an expansion chamber in a set-up as shown in the figure - the geometry of the flow part shown in bold, and the direction of flow indicated by an arrow.
Fig. 14 is a graph showing an axial plot of the velocity (m/s) as a function of the distance in the same set-up as shown in Fig. 13.
Fig. 15 is a graph showing an axial plot of the static pressure (Pa) as a function of the distance in the same set-up as shown in Fig. 13.
Fig. 16 is a graph showing an axial plot of the static temperature (Kelvin) as a function of distance in a geometry as in Fig. 13 but with the introduction of quenching media and the formation of a turbulent flow, schematically indicated with arrows.
Fig. 17 is a graph showing an axial plot of the velocity (m/s) as a function of the distance in the same set-up as shown in Fig. 16.
Fig. 18 is a graph showing an axial plot of the static pressure (Pa) as a function of the distance in the same set-up as shown in Fig. 16.
Fig. 19 is the result of a simulation, shown the flow pattern in an expansion chamber where a flow of quenching medium is introduced, resulting in efficient mixing.

### Detailed description

Before the present invention is described, it is to be understood that the terminology employed herein is used for the purpose of describing particular embodiments only and is not intended to be limiting, since the scope of the present invention will be limited only by the appended claims and equivalents thereof.

It must be noted that, as used in this specification and the appended claims, the singular forms "a," "an," and "the" include plural referents unless the context clearly dictates otherwise.

In the present specification and the appended claims, the term "about" is used to indicate a range of ±10% of the specified value, unless otherwise indicated in the context of the specific disclosure.

A thermal reactor arrangement, and in particular a thermal reactor arrangement for the synthesis of nitrogen oxides (NOx), can be designed in different ways. One key consideration is the recycling of gases as this has the potential of significantly improving energy and material efficiency.

Since a substantial portion of the reactants remains unreacted in the plasma reactor, recycling this gas offers considerable benefits. Although a small fraction of the gases reacts in subsequent oxidation steps, the majority remains as unreacted feed gas. This results in a high cycle count, necessitating careful cleaning of the recycled gas mixture to remove undesired species, preventing corrosion, and ensuring the longevity of the plant. Recycling also allows the use of gas that already has a high oxygen content and pressure, which results in significant energy savings compared to an open system without recirculation. With recirculation, only the fresh feed gas requires the steps of separation, concentration and pressurization.

Two fundamental process alternatives, each with several subvariants, were developed and designated as the single-pressure and dual-pressure processes. The single-pressure process encompasses all process variants that do not involve an expansion turbine or pressure change with energy recovery. The pressure drop in these processes results solely from pressure losses through process components and reactions. In contrast, process cycles that integrate one or more expansion turbines are classified as dual-pressure processes. In these, pressure is deliberately reduced by converting the potential energy of the gas into mechanical or electrical energy. Since all variants involve recirculating processes with high flow rates, it is crucial that this pressure reduction is efficiently utilized to offset the subsequent pressure buildup to the process pressure, ensuring a net energy savings.

In a single-pressure process as shown in Fig. 1 and 2, it is possible to essentially maintain a high pressure through the absorption column (making it more compact, facilitating the second expansion to NO₂, and facilitating the absorption and formation of HNOs) and less energy is required for the compressor that will compensate for the pressure drop through the downstream parts and to drive the gas through the reactor. The rapid expansion results in an initial drop in pressure which effectively stops unwanted chemical reactions, such as the Zeldovich reaction, causing loss of NO back to N₂ and O₂. Further, the subsequent introduction of quenching medium can be adapted to give the gas flow the desired composition and temperature optimized for the downstream processing. The choice of quenching medium and its volume can be more freely chosen, as the initial pressure drop, and the initial cooling has already been achieved by the expansion.

The fast reduction of temperature entails further advantages with regard to controlling the chemical reactions. At the high temperatures involved, the reaction constants are very high, but at the lower temperatures reached after expansion cooling, the constants are smaller, and potential backward reactions proceed significantly more slowly.

Specifically in a single-pressure process as shown in Fig. 2, where the gas is recirculated via a heat exchanger (2) in order to recover process heat while pre-heating the gas feed before the reactor (3), the inventive expansion and subsequent quenching makes it possible to control the composition, pressure and temperature of the recirculated gas so that efficient contact and heat transfer takes place in the heat exchanger (2).

The dual-pressure process variants closely resemble the single-pressure process but introduce expansion turbines (5) at different positions downstream of the plasma reactor (3) and expansion chamber (4) to improve energy recovery. The process is called a dual-pressure process as it features two primary pressure levels: a high-pressure level at the reactor inlet and a lower pressure upstream of the absorption column. The turbines, placed directly in the gas flow, expand the high-temperature, high-pressure fluid, converting excess thermal energy into mechanical power. This results in a net energy gain, despite the increased work required for recompression, as the mechanical energy is recovered as electricity generated by the turbine or turbines. Injecting water as a quenching media in (4) upstream of the turbine not only increases the quenching speed and reduction of temperature, but also increases the specific heat capacity of the gas mixture, enhancing the turbine's power output.

The turbine must however be designed to withstand the harsh conditions, including high inlet temperatures, oxygen partial pressures, and water vapor content. This dual-pressure approach, with its turbine integration, offers significant energy recovery potential, especially if pressure can be recovered after the expansion cooling, as the velocity of the gas is being reduced. This approach however requires careful management of fluctuating operating conditions, corrosive environment, and thermal material limitations.

In a dual-pressure high temperature process as shown in Fig. 3, the turbine can be regarded as a second quenching mechanism, and the inventive expansion and subsequent addition of quenching medium makes it possible to optimize the operating conditions of the turbine, and in particular regulating the temperature of the gases reaching the turbine.

In the dual-pressure low-temperature process, as shown in Figure 4, the turbine operates under milder conditions. In this configuration, the turbine (5) is positioned downstream of a heat exchanger (2) and upstream of an absorption stage (7), where it expands the still relatively hot process gases. After reaching a defined end temperature of approximately 1300 to 1600 K through the sequential expansion and quenching in (4), these gases transfer part of their thermal energy to the reactor inlet gas in the heat exchanger (2), thus preheating the inlet gas before it flows into the plasma reactor (3). This configuration enables maximum heat exchanger inlet temperatures and therefore optimizes preheating efficiency, as the temperature is not constrained by the turbine's inlet temperature limit. This also means that the turbine cannot be used as an additional quenching mechanism, so the required temperature is instead adjusted by the expansion and quenching taking place in (4). The combination of expansion and quenching adds flexibility to this adjustment.

Operating a thermal reactor at elevated pressures enhances nitrogen fixation efficiency, but the down-stream pressure and high temperatures requires specialized materials and safety precautions. The inventive expansion and quenching make it possible to rapidly reduce the temperatures, and the introduction of quenching media can serve several purposes in addition to further reducing temperature: adding fresh gases to the reaction improving reaction kinetics, adding medium to neutralize corrosive conditions, adding water to increase the heat transfer capacity in downstream heat recovery, etc.

It is also an advantage that the quenching medium is added at a point where the gas mixture has already been expanded, as this avoids excessive dilution, as the gas has already been cooled in the initial expansion and the temperature and pressure is radically less than in the reaction chamber, so less quenching medium is needed. If water is used as a quenching media, it is an advantage that the water can now be added to an expanded gas that has already reached a lower temperature. By comparison, performing the quenching by adding water to the plasma chamber leads to the undesired formation of reactive hydrogen radicals.

A further advantage is that the plasma in the plasma chamber is not disturbed, as the quenching is performed in a separate expansion chamber, not in the plasma reactor itself. This is the case in particular when a supersonic gas flow is achieved through the transition from plasma chamber to expansion chamber, as this leads to a choked flow where no information such as vibrations etc can go backwards.

Further, the addition of quenching medium can be performed in a way as to create favourable flow patterns in the expansion chamber, centering and stabilizing the jet of hot gases, but also ensuring efficient mixing and rapid cooling, as desired. Examples of this are illustrated in the figures, starting with Fig. 7, which schematically shows how the Venturi effect acts on quenching medium, creating turbulence.

Figs. 8 through 11 illustrate different positions for introducing quenching medium. In Fig. 8, the inlets (410) are arranged in the downstream portion of the opening forming the transition between the reaction chamber and the expansion chamber. In such configurations, the quenching medium is introduced into the expanded gas at an early stage of expansion. The inlets (410) can be configured to create a desired flow pattern, for example a swirl or a vortex.

Fig. 9 shows an embodiment where inlets (411) are arranged outside the opening (38), but adjacent to the opening (38) though which the hot gas mixture enters the expansion chamber. The inlets are preferably symmetrically arranged around said outlet, for example as illustrated in Fig. 12A, where three outlets are shown. The inlets are preferably evenly spaced, for example two inlets pair-wise opposed, 180 degrees apart; shifted 120 degrees apart in the case of three inlets, 90 degrees in the case of four inlets and so on.

In Fig. 10, inlets (412) are shown as arranged in the side walls of the expansion chamber. In one embodiment, these inlets are evenly positioned, for example as shown in Fig. 12B, exhibiting rotational symmetry, for example shifted 90 degrees in relation each other in the case of four inlets. In one embodiment said inlets are configured to create a tangential flow of quenching medium at least initially following the walls of the expansion chamber, and preferably creating a swirl or a vortex which follows the flow of the gas mixture downstream in the expansion chamber.

Fig. 11 shows an embodiment where multiple inlets (410, 413) are arranged, configured to introduce quenching medium in different locations of the expansion chamber, and preferably introducing the quenching medium in directions which differ from the main direction of the flow of expanded gas. It is also contemplated that quenching media of different composition is introduced in different locations of the expansion chamber. The provision of several sets of inlets adds flexibility to the process, allowing precision control of the conditions in the quenching chamber with regard to temperature, mixing, flow dynamics, chemical reactions and reaction kinetics, and so on.

The introduction of quenching media into the expanded gas offers a possibility cool the gases much faster, which helps to minimize the loss of NO due to backwards reactions, and to stabilize, balance and to center the jet of hot gas entering the expansion chamber, or, if desired, to create turbulence, a vortex, or even counter-current flow patterns to further increase the rate of cooling, and to protect the walls of the expansion chamber from extreme temperatures.

Fig. 12 shows two embodiments illustrating how quenching media is introduced into the expansion chamber. In Fig. 12 A, inlets (411) are symmetrically arranged around the downstream opening (38) of the outlet (32) through which hot gas enters the expansion chamber from the plasma chamber. A symmetrical arrangement of the inlets will create a flow of quenching media surrounding the hot gas entering the expansion chamber. Fig. 12 B shows an alternative arrangement, freely combinable with the previous, where inlets (412, 413) are arranged to tangentially introduce quenching media into the expansion chamber. This arrangement creates a swirl or vortex of quenching medium following the side walls of the expansion chamber, and then moving downstream, towards the outlet of the expansion chamber.

### Examples

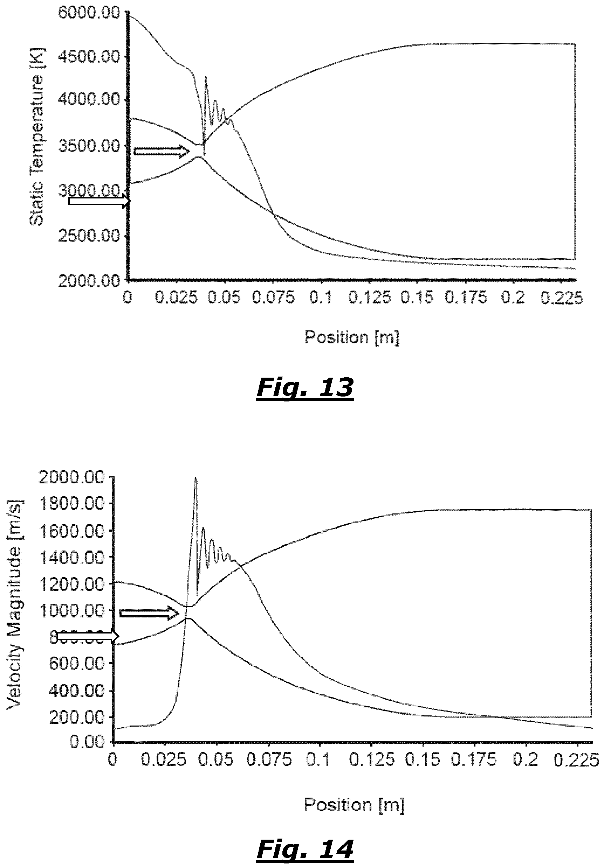

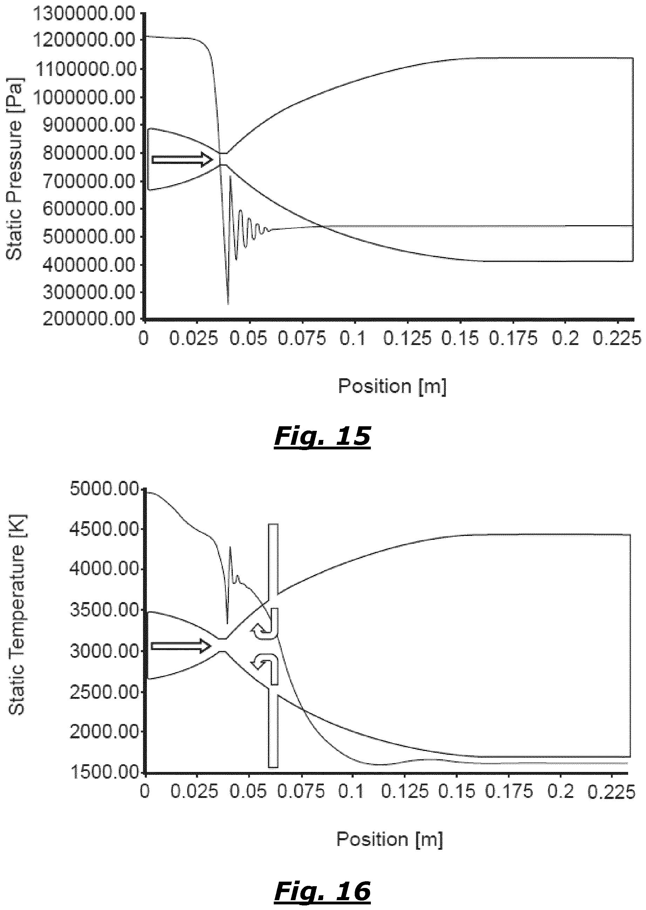

Simulations of the fluid dynamics have shown that the temperature drop is very fast, and that the temperature of the gas mixture is practically halved within the first centimeters of the expansion chamber. When quenching medium is added subsequent to expansion, the temperature drop is even more accentuated. Figs. 13, 14, and 15 show how the temperature, velocity and pressure drops when the gas enters an expansion chamber. There is however a temperature spike and subsequent temperature oscillation seen in Fig. 13, as well as shock waves clearly visible as velocity and pressure oscillations in Figs. 14 and 15.

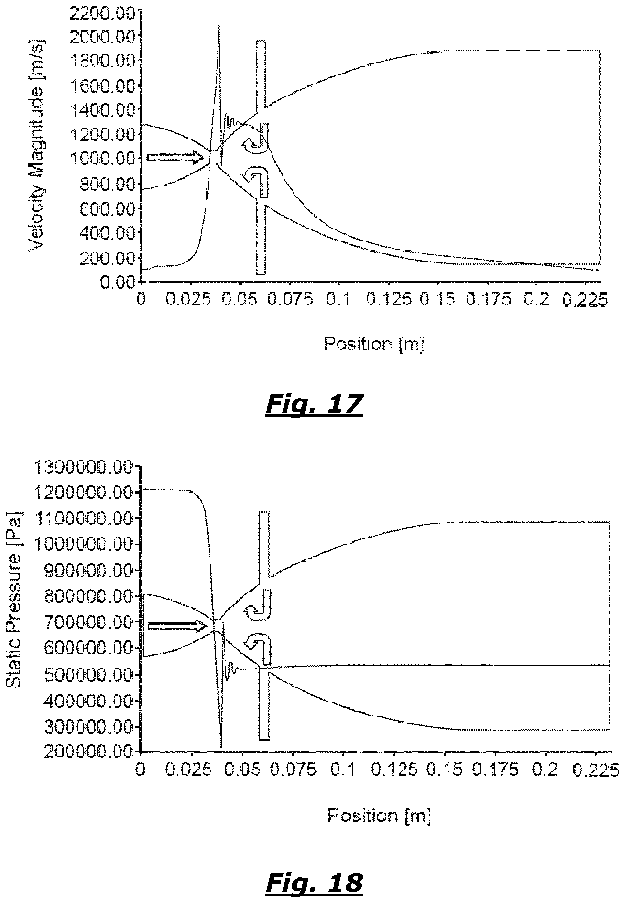

Conversely, the introduction of quenching medium into the expanded gas, as illustrated in Fig. 16 results in a significantly more effective reduction of temperature. Additionally, Fig. 17 illustrates how, after an initial spike and supersonic velocities when passing the throat of the transition, the velocity oscillations are significantly reduced. Finally, Fig. 18 shows how the pressure is rapidly reduced from above 1.200 kPa to a stable level of about 500 kPa.

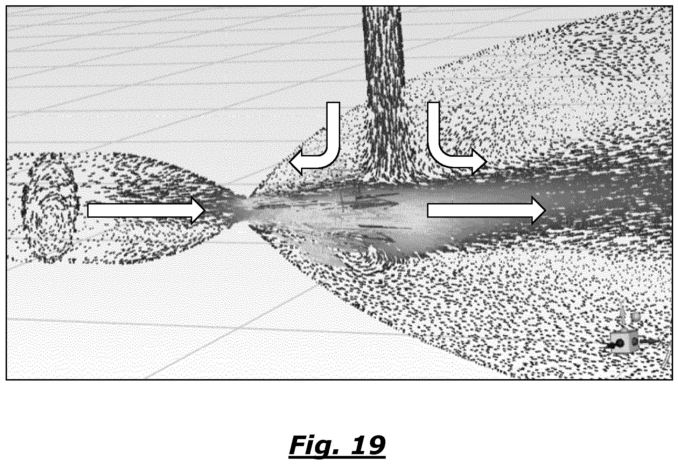

Simulations also indicate that the instant pressure drop creates a turbulence which brings cooler gas to the inner surface of the expansion chamber, protecting the walls of the expansion chamber from extreme temperatures. An example of the flow pattern is shown in Fig. 19, showing the result of simulations of a set-up where a flow of quenching medium is introduced into the jet of expanded gas.

Additionally, the introduction of quenching media has been shown to interact in a favourable way with the expanding reaction gas, stabilizing the flow to the center of the expansion chamber, ensuring good mixing and efficient cooling, and creating a swirl which protects the walls of the chamber, and in some configurations, also creating - at least in parts of the expansion chamber - a turbulent flow and locally even a counter-current flow of gas due to the Venturi effect. Directing a flow of cooler gas to the walls of the expansion chamber allows the use of materials and material dimensions that reduce the cost of the equipment.

The introduction of quenching medium into the expanded gas also gives the possibility to counteract shock waves and reduce the sound as well as the mechanical strain on the components.

Preliminary results obtained by the present inventors indicate that the rapid pressure drop in the initial expansion effectively reduces the temperature, and that the subsequent quenching by introducing quenching medium further stabilizes the flow of gas, counteracts the formation of shock waves, achieves efficient mixing and protects the walls of the expansion chamber. Importantly, creating a choked flow, being the result of reaching supersonic velocity through the outlet from the plasma reactor, makes it possible to perform the expansion and quenching without disturbing the plasma, and without interfering with the formation of NOx. In fact, the inventive expansion and quenching prevents or at least minimizes the occurrence of backward reactions. The inventors have show that an efficient and very rapid cooling is achieved in a very short distance. Additionally, the volume of quenching medium is minimized, which minimizes the dilution of the gas.

Without further elaboration, it is believed that a person skilled in the art can, using the present description, including the examples, utilize the present invention to its fullest extent. Also, although the invention has been described herein with regard to its preferred embodiments, which constitute the best mode presently known to the inventors, it should be understood that various changes and modifications as would be obvious to one having the ordinary skill in this art may be made without departing from the scope of the invention which is set forth in the claims appended hereto.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A thermal reactor arrangement for the synthesis of nitrogen oxides (NOx), said reactor arrangement comprising a plasma chamber (3, 30) configured to hold a plasma (P) at a temperature and a pressure at which nitrogen and oxygen molecules dissociate, said plasma chamber (3, 30) having a gas inlet (31) configured to introduce a gas mixture, a heater (33) configured to heat said gas mixture to generate a plasma in a plasma-generation zone (32), a reaction zone (34) downstream of said plasma-generation zone (32), and a gas outlet (36) configured to release gas from said reaction zone (34);
wherein an expansion chamber (4, 40) is arranged in fluid connection with said gas outlet (36), and
wherein at least one port (41), configured to introduce a quenching medium, is arranged in said expansion chamber (4, 40), and
wherein said expansion chamber further comprises an outlet (42) configured to release expanded and quenched gas.

2. The thermal reactor arrangement according to claim 1, wherein at least one dimension of said expansion chamber (4, 40) is configured in relation to at least one dimension of said plasma chamber (3, 30) to create a pressure drop to a pressure in the expansion chamber which is about 30 to 70 % of the pressure in the plasma chamber (3, 30), preferably about 30 to 60 %, more preferably about 50 %, and most preferably about 40 % of the pressure in the plasma chamber (3, 30).

3. The thermal reactor arrangement according to claim 1 or 2, wherein the pressure in the expansion chamber is at least 1 bar (100 kPa) absolute pressure.

4. The thermal reactor arrangement according to claim 1, wherein a diameter (D) of the expansion chamber (4, 40) is greater than a diameter (d) of the plasma chamber (3, 30), preferably two times, more preferably 3 times the diameter (d) of the plasma chamber (3, 30).

5. The thermal reactor arrangement according to claim 4, wherein said reaction zone (34) and said expansion chamber (4, 40) exhibit rotational symmetry around their length axis, and wherein the diameter (D) of said expansion chamber (4, 40) is at least two times, preferably at least three times the diameter (d) of said reaction zone (34).

6. The thermal reactor arrangement according to claim 1, wherein at least one port (41) for introducing a quenching medium into said expansion chamber (4, 40) is configured to cause at least a portion of the quenching medium to initially flow in a direction substantially opposite to the gas entering the expansion chamber (4, 40).

7. The thermal reactor arrangement according to claim 1, wherein said at least one port (41) for introducing a quenching medium into said expansion chamber (4, 40) is configured to cause at least a portion of the quenching medium to flow tangentially along the inner surface of said expansion chamber (4, 40) in a direction towards the outlet (42) of the expansion chamber.

8. The thermal reactor arrangement according to claim 1, wherein said quenching medium is chosen from nitrogen, oxygen, air, and water, and wherein said quenching medium is introduced in the form of a liquid, a gas, or a mixture thereof.

9. The thermal reactor arrangement according to claim 1, wherein said heater (33) is chosen from a microwave generator, a radio wave generator, a laser generator, an inductively coupled plasma (ICP) or a transformer coupled plasma (TCP), and an electric discharge generator.

10. A method for the synthesis of nitrogen oxides (NOx) comprising the following steps:
- providing a gas mixture comprising oxygen and nitrogen; and
- heating said gas mixture to form a plasma at a temperature and pressure at which nitrogen and oxygen molecules dissociate and form nitrogen oxides (NOx),
wherein said gas mixture comprising nitrogen oxides (NOx) is expanded to form an expanded gas mixture at a pressure which is about 70 % of the pressure at which nitrogen and oxygen molecules dissociate, preferably about 60 %, more preferably about 50 %, and most preferably about 40 % of the pressure at which nitrogen and oxygen molecules dissociate, and
wherein said expanded gas mixture is quenched by introducing a quenching medium to further reduce the temperature of the expanded gas mixture.

11. The method according to claim 10, wherein gas mixture comprising oxygen and nitrogen is heated to a temperature of at least 2300 K and maintained at a pressure of 2 - 100 bar, such as 5 - 100 bar, or a pressure of 10-100 bar, forming a gas mixture comprising NOx.

12. The method according to claim 10, wherein said gas mixture is expanded to form a gas mixture at a pressure of at least about 1 bar (100 kPa), preferably a pressure of 1 - 50 bar (100 - 5000 kPa), such as 1 - 30 bar (100 - 1000 kPa), such as 1 - 10 bar (100 - 1000 kPa).

13. The method according to claim 10, wherein said quenching medium is introduced creating a tangential flow along an inner surface of a chamber where the expansion takes place, moving in a direction towards the outlet of said chamber.

14. The method according to claim 10, wherein said quenching medium is introduced creating a flow of quenching medium in a direction substantially opposite to direction of the gas entering the expansion chamber.

15. The method according to claim 10, wherein said quenching medium is chosen from nitrogen, oxygen, air, and water, and wherein said quenching medium is introduced in the form of a liquid, a gas, or a mixture thereof.
